Europäisches Patentamt

(19) European Patent Office

Office européen des brevets

(11) Publication number: **0 291 105 B1**

# EUROPEAN PATENT SPECIFICATION

(45) Date of publication of patent specification :
**09.10.91 Bulletin 91/41**

(51) Int. Cl.$^5$: **B65G 47/26, B65G 13/073**

(21) Application number: **88200573.9**

(22) Date of filing: **25.03.88**

(54) Accumulator roller conveyor and driving roller therefore.

(30) Priority: **12.05.87 NL 8701126**

(43) Date of publication of application:
**17.11.88 Bulletin 88/46**

(45) Publication of the grant of the patent:
**09.10.91 Bulletin 91/41**

(84) Designated Contracting States:
**AT BE CH DE ES FR GB GR IT LI LU NL SE**

(56) References cited:
**EP-A- 0 034 131**
**EP-A- 0 034 131**
**BE-A- 870 482**
**DE-A- 3 222 177**

(73) Proprietor: **Stork Conveyor Systems B.V.**
**Postbus 70**
**NL-4940 AB Raamsdonksveer (NL)**

(72) Inventor: **Schiedon, Johannes**
**c/o Postbus 70**
**NL-940 AB Raamsdonksveer (NL)**

(74) Representative: **den Boer, Jan Johannes, Ir. et al**
**Octrooibureau Polak & Charlouis Laan Copes van Cattenburch 80**
**NL-2585 GD The Hague (NL)**

## Description

The invention relates to a roller conveyor of the accumulator conveyor type, adapted to be driven by an endless belt or chain drive, comprising rollers which are axially fixed in place and mounted for rotation about a stationary shaft having its ends fixedly mounted in a supporting frame, a drive wheel mating with said belt or chain drive and being mounted for rotation coaxially to the respective roller, a friction disc being provided, which is in permanent driving connection with said roller and adapted to be also drivingly connected with said drive wheel, an axially expandable actuation member (membrane) being supported by a house portion on the supporting frame at one roller end, said member being adapted to be pressure-activated so as to cause the friction disc and the drive wheel to axially engage one another.

Such a roller conveyor is disclosed in DE-A-3.222.177.

Accumulator conveyors are used for carrying goods from one location to another location, where the goods are taken from the conveyor for further treatment, e.g. in a processing or packaging machine. In case of a stagnation of the goods at the delivery end of the conveyor, e.g. when the fully loaded processing or packaging machine is temporarily prevented from taking goods from the conveyor, the goods are permitted to remain (i.c. accumulate) on the delivery end section of the conveyor due to the rollers in that conveyor section being stopped. The driving motor for the conveyor, however, may be kept going, so that the supply of goods may continue along the upstream conveyor sections. Even when the conveyor is completely loaded with goods and as a consequence of this all of the rollers have been brought to a standstill, the drive motor may keep rotating. As soon as goods are taken from the conveyor again the rotation of the rollers in the delivery end section of the conveyor is restored. The activation and deactivation respectively of the drive of the rollers in any section is effected by means of a switching roller in such section, which normally projects above the level of the conveyor rollers but is mounted to be depressed by an article resting on it so as to produce a signal in the rollers in the respective conveyor section to be disengaged from the conveyor drive. More specifically the signal produced results in the actuation of a pneumatic control valve which causes a release of pressure and thereby a collapse of the axially expandable member, due to which the drive wheel(s) is (are) disengaged from the respective conveyor roller(s).

In the roller conveyor according to DE-A-3.222.177 the friction disc is fixedly connected to an end face of the respective roller, whereas the expandable member is acting upon the driving wheel so a to displace the latter axially into and out of engagement with said friction disc. A similar friction disc is provided on the opposite end face of the roller for cooperation with a braking disc, which is mounted non-rotationally, but may be axially displaced by a second expandable member into engagement with said second friction fisc so as to brake the roller, after the latter has become disengaged from the drive wheel.

The roller conveyor proposed by the present invention distinguishes from this well-known roller conveyor in that said friction disc is slidably mounted relative to said roller for movement between a first axial position — corresponding to the inactivated state of the expandable member — in which it is spring-urged with an axial face in friction contact with a fixed wall portion of said housing, and a second axial position, in which it is urged by the pressure-expanded member into driving engagement with an axial surface of said drive wheel.

Consequently, in the roller conveyor of the present invention a single friction disc is mounted to function both as a drive-coupling disc and as a braking disc, while a single axially expandable member is needed for both the drive and break function.

It is to be noted that US-A-4.108.303 discloses an accumulator roller conveyor of the same general type, in which a plurality of rollers is driven by a driving chain through a friction disc which is controlled by a gas pressure-operated expandable member (membrane). In this well-known construction, however, the movement of the rollers into and out of engagement with the drive means is rather jerky due to the type of engagement between sprocket-drive wheel and chain, which may result in rapid wear of the conveyor and damage to shock-sensitive goods.

It is further to be noted that a roller conveyor is known from the EP-A-0034131 in which an inflatable ring is mounted coaxially around the roller shaft and is shiftable with respect thereto. A sprocket is provided around the roller with the interposition of self releasing wedges. A thrust member is provided around the roller shaft and axially shiftable relative thereto and is adapted to press the wedges into fixed engagement with the sprocket, through the inflatable ring, whereby the roller drive may be switched on. A disadvantage is the continuous slipping occuring between one of the wedges, secured to the roller, and the sprocket, whereby wear occurs and further that the roller is not positively braked as according to the invention, when the roller drive is switched off.

Further BE-870.482 discloses a roller conveyor having a friction clutch between a roller and a driving sprocket. An inflatable tube, provided locally adjacent to the roller, engages the clutch through a rocker arm. Disengagement of the clutch is obtained with the help of a compression spring. Also here the roller is not positively braked and quickly stopped when the drive is switched off.

In a preferred embodiment of the invention the said house portion is formed to enclose the drive wheel with its friction surface, the chain or belt, the friction disc and the expandable-member (membrane), said house portion being provided with a hinged bottom part which may be swung away from the return run of the chain.

Preferably also at least the lower part of the housing portion is formed from a resilient synthetic material, permitting the swinging movement of the bottom part.

The invention also relates to a roller assembly adapted to be used in the roller conveyor according to the invention.

Fig. 1 shows a very schematic side view of an accumulator roller conveyor.

Fig. 2 shows an elevation of a conveyor roller with driving unit in section.

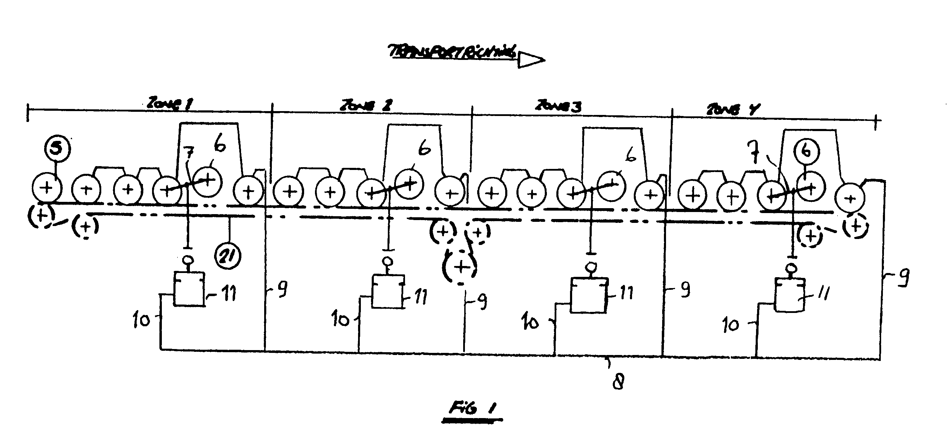

In fig. 1 a schematic example is shown of an accumulator conveyor having four zones or conveyor parts 1, 2, 4 which are situated one behind the other as seen in the conveying direction. It will be clear that the conveyor may comprise more parts. The parts are mutually equal. Each part comprises a plurality of conveyor rollers 5, situated one behind the other in the conveying direction and mounted in a frame (not shown). The number may differ from the number as shown in fig. 1.

The said switching roller 6 is pivotably mounted on a lever 7 to the frame forward of the last roller or last rollers of a conveying zone. A pneumatic circuit is connected somewhere (not shown) to a pressurized air source, e.g. a mains having an above atmospheric pressure of about 4 bar. This circuit comprises a conduit 8 extending along the conveyor, a circuit 9 being branched therefrom to each conveyor part 1, 2, 3, 4, each said branch conduit conducting in series to the conveyor rollers 5 situated one behind the other, particularly to the membrane housings thereof, which will be described below. Likewise for each conveyor part a conduit 10 is branched from the conduit 10 connecting with a pneumatic switch 11.

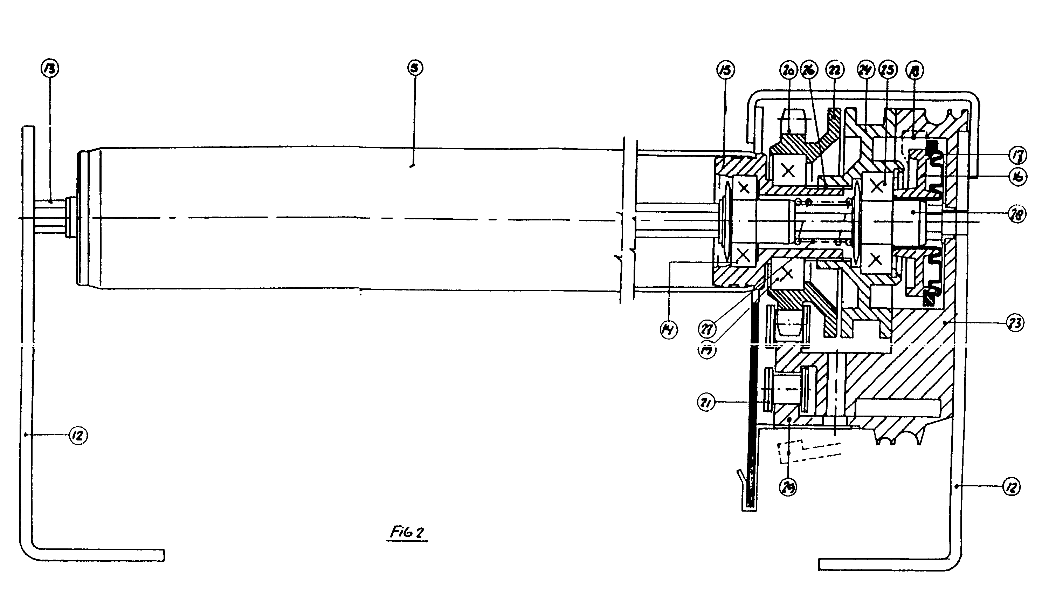

Fig. 2 shows at an enlarged scale a conveyor roller 5, mounted in the frame 12 of the conveyor on a shaft 13. A bearing housing 15 secured to the roller 5 is mounted on the right hand end of the shaft 13 as shown in figure 2, freely rotatable through a ball bearing 14. An axially expandable member in the form of a membrane housing 16 with membrane 17 is secured to this right hand shaft end through a slidable sleeve 28. Therewith the conduit 9 is connected at 18.

A sprocket 20 is mounted freely rotatable through a ball bearing 19 on the bearing housing 15, said sprocket being in engagement with the pulling run of the driving chain 21 of the conveyor. Said sprocket has a flange or friction disc 22 facing the membrane housing and is provided non-shiftable in the axial direction of the bearing housing 15.

The complete driving unit for the roller is received in a housing 23 which is secured to the frame 12. An intermediate disc 24 is provided between the sprocket flange 22 and the membrane housing 16, freely rotatable on the slidable sleeve 28 through a ball bearing 25. Said intermediate disc 24 is also axially slidable relative to the shaft 13 in that a hub sleeve of the disc 24 is provided on the bearing housing 15 of the conveyor roller through a key connection 26. A compression spring 27 is received around the shaft 13 in a chamber of the bearing housing 15 and acts on the intermediate disc 24 through the slidable sleeve 28.

In the inoperative condition, i.e. when pressurized air is not admitted to the membrane housing, the intermediate disc 24 engages, as shown, through the spring 27 a surface of the housing 23 through its right hand surface.

The operation is as follows that when pressurized air is admitted to the membrane housing 16, 17, this housing moves to the left, overcomes the force of the spring 27 and pushes the intermediate disc 24 to the left whereby its left hand surface engages with the right hand surface of the flange 22 on the sprocket 20. Since the chain 21 is continuously driven, its driving force drives the roller 5 through the flange 22, the intermediate disc 24 and the key connection 26 with the bearing housing 15. It will be clear that the intermediate disc constitutes a friction clutch with the part 22 and the housing 23 situated at both sides thereof. The start of the roller drive occurs gradually because of said friction clutch, but also stopping takes place without shocks and yet quickly. For stopping the drive, e.g. when a carton engages the switching roller 6, the pneumatic switch 11 is actuated. If in the pneumatic circuit the occupied signal of the previous sone is given, the membrane housings of the relative zone are depressurized. Thereafter the spring 27 is allowed to push the intermediate disc 24 against the housing 24, so that this disc and therefore the conveyor roller 5 is quickly braked.

Thereby only a short stopping length is required at the end of a conveyor part, since the carton quickly stops after switching off the drive.

Preferably the housing 23 is manufactured from a resilient synthetic material whereby the bottom 29, after releasing snap elements (not shown), can be pivoted downwardly, as is shown with broken lines in figure 2.

Thereafter the complete roller with its driving housing may be released from the chain for repairs or maintenance.

Apart from pneumatic, the drive may also be mechanical, hydraulic or electrical. The pneumatic drive, however, is usually the most simple and most inexpensive.

## Claims

1. A roller conveyor of the accumulator conveyor type, adapted to be driven by an endless belt or chain drive (21), comprising rollers (5) which are axially fixed in place and mounted for rotation about a stationary shaft (13) having its ends fixedly mounted in a supporting frame (12), a drive wheel (20) mating with said belt or chain drive (21) and being mounted for rotation coaxially to the respective roller (5), a friction disc (24) being provided, which is in permanent driving connected with said roller (5) and adapted to be also drivingly connected with said drive wheel (20), an axially expandable actuation member (membrane) (16, 17) being supported by a house portion (23) on the supporting frame (12) at one roller end, said member (16, 17) being adapted to be pressure-activated so as to cause the friction disc (24) and the drive wheel (20) to axially engage one another characterized in that said friction disc (24) is slidably mounted relative to said roller (5) for movement between a first axial position — corresponding to the inactivated state of the expandable member (16) — in which it is spring-urged with an axial face in friction contact with a fixed wall portion of said housing (23), and a second axial position, in which it is urged by the pressure-expanded member (16) into driving engagement with an axial surface (22) of said drive wheel (20).

2. A roller conveyor according to claim 1, characterized in that the house portion (23) is formed to enclose the drive wheel (20) with its friction surface (22), the chain or belt (21), the friction disc (24) and the expandable member (16), said house portion (23) having a hinged bottom (29) which may be swung away from the return run of the chain (21).

3. A roller conveyor according to claim 2, characterized in that at least the lower part of the house portion (23) is formed from a resilient synthetic material permitting the swinging movement of the bottom (29).

4. A roller assembly for use in a roller conveyor according to claim 1, comprising a roller (5) which is axially fixed in place and mounted for rotation about a stationary shaft (13) having its ends fixedly mounted in a supporting frame (12), a drive wheel (20) adapted to mate with the belt or chain drive (21) of the conveyor and mounted for rotation coaxially to the roller (5), a friction disc (24) being provided, which is in permanent driving connection with said roller (5) and adapted to be also drivingly connected with said drive wheel (20), an axially expandable actuation member (membrane) (16, 17) being supported by a house portion (23) on the supporting frame (12) at one roller end, said member (16, 17) being adapted to be pressure-activated so as to cause the friction disc (24) and the drive wheel (20) to axially engage one another, and which is characterized in that said friction disc (24) is slidably mounted relative to said roller (5) for movement between a first axial position — corresponding to the inactivated state of the expandable member (16) — in which it is spring-urged with an axial face in friction contact with a fixed wall portion of said housing (23), and a second axial position, in which it is urged by the pressure-expanded member (16) into driving engagement with an axial surface (22) of said drive wheel (20).

## Patentansprüche

1. Staurollenförderer, dazu geeignet um durch ein endloses Riemen- oder Kettengetriebe angetrieben zu werden, mit in achsialer Richtung feststehenden Rollen, die um eine mit ihren Enden in einem Tragrahmen (12) festmontierten stationären Welle drehbar sind, wobei ein Treibrad (20) mit dem Riemen- oder Kettengetriebe in Eingriff steht und koachsial mit der betreffende Rolle (5) drehbar, ferner eine Reibungsscheibe (24) vorgesehen ist, die mit der Rolle (5) in dauernder Treibverbindung steht und ebenfalls mit dem Treibrad (20) in Treibverbindung treten kann, ein in achsialer Richtung ausdehnbares Aktivierungselement (Membran) (16, 17) von einem Gehäuseteil (23) am Tragrahmen (12) an einem Rollenende gestützt wird, welches Element (16, 17) durch Druck aktiviert zu werden um die Reibungsscheibe (24) und das Treibrad (20) in achsialer Richtung miteinander in Eingriff treten zu lassen, dadurch gekennzeichnet, dass die Reibungsscheibe (24) mit bezug auf die Rolle (5) verschiebbar angeordnet ist zum Bewegen zwischen einer ersten Achsiallage — dem Aktivierungszustand des ausdehnbaren Elements (16) entsprechend — in welcher eine Feder ihr mit einer Stirnfläche in Reibungskontakt mit einen festen Wandteil des Gehäuses (23) bringt und einer zweiten Achsiallage, in welcher das durch Druck aus gedehnte Element (6) ihr in Treibverbindung mit einer Stirnfläche (22) des Treibrads (20) setzt.

2. Rollenförderer nach Anspruch 1, dadurch gekennzeichnet, dass das Gehäuseteil (23) derart gestaltet ist, dass es das Treibrad (20) mit seiner Reibungsfläche (22), die Kette oder der Riemen (21), die Reibungsscheibe (24) und da ausdehnbare Element (16) umschliesst, wobei das Gehäuseteil (23) ein gelenkiges Bodenteil (29) aufweist, das vom rückkehrenden Trum der Kette (21) wegschwenkbar ist.

3. Rollenförderer nach Anspruch 2, dadurch gekennzeichnet, dass mindestens der untere Abschnitt des Gehäuseteils (23) aus einem die Schwenkbewegung des Bodenteils (29) gestattenden biegsamen Kunststoff geformt ist.

4. Rollenznordung zur Anwendung in einem Staurollenförderer nach Anspruch 1, mit einer in achsialer Richtung feststehenden und um eine mit ihren Ende in einem Tragrahmen (12) gestützten stationären Welle (13) drehbaren Rolle (5), einem mit dem Riemen- oder Kettengetriebe (2) des Förderers zusammenarbeitenden Treibrad (20), und mit einer Reibungsscheibe (24), die mit der Rolle (5) in Dauerverbindung steht und ebenfalls mit dem Treibrad in Treiverbindung bringbar ist, wobei ein Gehäuseteil (23) am Tragrahmen (12) an einem Rollenende ein in achsialer Richtung ausdehnbare Elements (Membran) (16, 17) stützt, welches Element (16, 17) druckbeaufschlagbar ist um die Reibungsscheibe (24) und das Treibrad (20) achsial miteinander in Eingriff zu setzen, und dadurch gekennzeichnet, dass die Reibungsscheibe (24) mit bezug auf die Rolle (5) verschiebbar angeordnet ist zum Bewegen zwischen einer ersten Achsiallage — dem Aktivierungszustand des ausdehnbaren Elements (16) entsprechend — in welcher eine Feder ihr mit einer Stirnfläche in Reibungskontakt mit einen festen Wandteil des Gehäuses (23) bringt und einer zweiten Achsiallage, in welcher das durch Druck ausgedehnte Element (6) ihr in Treibverbindung mit einer Stirnfläche (22) des Treibrads (20) setzt.

## Revendications

1. Convoyeur à rouleaux du type des convoyeurs à accumulation, apte à être entraîné par une courroie sans fin ou bien une transmission par chaîne (21), comprenant des rouleaux (5) qui sont axialement fixés en place et montés pour une rotation autour d'un arbre stationnaire (13) ayant ses extrémités fixement montés sur une structure de support (12), une roue d'entraînement (20) s'engageant avec ladite courroie ou bien transmission par chaîne (21) et étant montée pour une rotation coaxalement au rouleau respectif (5), un disque de friction (24) étant prévu, qui est en liaison d'entraînement permanente avec ledit rouleau (5) et apte à être également relié de façon entraînante avec ladite roue d'entraînement (20), un membre de commande expansible axialement membrane (16, 17) étant supporté par une partie de logement (23) sur la structure de support (12) à une extrémité du rouleau, ledit membre (16, 17) étant apte à être activé par pression de façon à entraîner le disque à friction (24) et la roue d'entraînement (20) à s'engager axialement l'un avec l'autre, caractérisé en ce que ledit disque de friction (24) est monté de façon coulissante relativement audit rouleau (5) pour un mouvement entre une première position axiale — correspondant à l'état désactivé du membre expansible (16) — dans lequel il est poussé par ressort avec une face axiale en contact par frottement avec une partie de paroi fixe dudit logement (23), et une seconde position axiale, dans laquelle il est comprimé par le membre expansé par une pression (16) dans un engagement d'entraînement avec une surface axiale (22) de ladite roue d'entraînement (20).

2. Convoyeur à rouleaux selon la revendication 1, caractérisé en ce que la partie de logement (23) est formée pour enfermer la roue d'entraînement (20) avec sa surface de frottement (22), la chaîne ou bien la courroie (21), le disque à friction (24) et le membre expansible (16), ladite portion de logement (23) ayant un fond pivotant (29) qui peut être balancé au loin de la voie de retour de la chaîne (21).

3. Convoyeur à rouleaux selon la revendication 2, caractérisé en ce qu'au moins la partie inférieure de la partie de logement (23) est formée à partir d'un matériau synthétique élastique permettant le mouvement de balancement du fond (29).

4. Assemblage à rouleaux pour une utilisation dans un convoyeur à rouleaux selon la revendication 1, comprenant un rouleau (5) qui est axialement fixé en place et monté pour une rotation autour d'un arbre stationnaire (13) ayant ses extrémités fixement montées sur une structure de support (12), une roue d'entraînement (20) apte à s'engager avec la courroie ou bien la chaîne de transmission (21) du convoyeur et montée pour une rotation coaxialement au rouleau (5), un disque à friction (24) étant prévu, qui est en liaison d'entraînement permanente avec ledit rouleau (5) et apte à être également relie de façon entraînante avec ladite roue d'entraînement (20), un membre de commande expansible axialement (membrane) (16, 17) étant supporté par une partie de logement (23) sur la structure de support (12) à une extrémité de rouleau, ledit membre (16, 17) étant adapté à être activé par pression de façon à entraîner le disque à friction (24) et le roue d'entraînement (20) à s'engager axialement l'un avec l'autre, et qui est caractérisé en ce que ledit disque à friction (24) est monte coulissant par rapport audit rouleau (5) pour un mouvement entre une première position axiale — correspondant à l'état désactivé du membre expansible (16) — dans laquelle il est poussé par ressort avec une face axiale en contact de frottement avec une partie de paroi fixe dudit logement (23), et une seconde position axiale, dans laquelle il est pousse par le membre étendu par pression (16) en engagement d'entraînement avec une surface axiale (22) de ladite roue d'entraînement (20).

FIG 1

Fig 2

EP 0 291 105 B1